# EUROPÄISCHE PATENTANMELDUNG

(11) **EP 0 715 117 A2**
(43) Veröffentlichungstag der Anmeldung: **05.06.1996**
(21) Anmeldenummer: 95117670.0
(22) Anmeldetag: 09.11.1995
(51) Int. Cl.: F16L 59/02

(54) **Wärmeisolierender Beutel**

(30) Priorität: 03.12.1994 DE 4443082
(71) Anmelder: HÜLS AKTIENGESELLSCHAFT, D-45764 Marl (DE)
(72) Erfinder: Landwehr, Dierk, Dr., D-48249 Dülmen (DE); Smigerski, Hans-Jürgen, Dr., D-45770 Marl (DE)

(57) **Zusammenfassung**

Praktisch wichtige, flexible Isoliersysteme besitzen Wärmeleitfähigkeiten von 0,03 W/m·K und mehr. Das neue Erzeugnis ist ein kostengünstiges, flexibles Isoliersystem mit deutlich verbesserter Wärmeisolationswirkung.

Der erfindungsgemäße wärmeisolierende Beutel besteht hierzu aus einer flexiblen, bevorzugt polymeren Außenhaut, die zumindest eine Kammer umschließt, die mit einem flexiblen Material gefüllt ist, dessen Isolationswirkung einer Wärmeleitfähigkeit kleiner oder gleich 0,02 W/m·K entspricht.

Wärmeisolierung von Behältern, Rohrleitungen und Apparaten.

## Beschreibung

Die Erfindung betrifft einen wärmeisolierenden Beutel sowie seine bevorzugte Verwendung zur Wärmeisolierung von Apparaten, Rohrleitungen und Behältern.

Die Erfindung bezweckt, ein flexibles, leicht an die Konturen der zu isolierenden Körper anpaßbares und einfach zu handhabendes Wärmeisoliermittel mit verbesserter Wärmeisolationswirkung und verbesserten Gebrauchseigenschaften kostengünstig bereitzustellen.

Für den Wärme- (bzw. Kälte-)schutz ist unter anderem aus dem Hochbau, der Kältetechnik oder dem Apparate- und Anlagenbau eine Vielzahl von Isoliersystemen bekannt. Die charakteristische Größe zur Beschreibung der Isolationswirkung dieser Systeme ist die Wärmeleitfähigkeit λ. Je geringer die Wärmeleitfähigkeit eines Isoliersystems ist, desto geringer fällt die benötigte Schichtdicke zur Erzielung einer vorgegebenen Isolationswirkung aus. Der Wert der Wärmeleitfähigkeit ist daher auch aus wirtschaftlicher Sicht bedeutsam. Es handelt sich bei den herkömmlichen Systemen in aller Regel um feststoffhaltige, teils formbare, teils nichtformbare Systeme, die geschäumte, faser- oder pulverartige Substanzen enthalten. Die vom Feststoff umgebenen Gasräume führen zu einer verglichen mit dem Feststoff verringerten Wärmeleitfähigkeit; meist ist das umschlossene Gas Luft. Herkömmliche, handelsübliche Isoliersysteme verfügen über Wärmeleitfähigkeiten von 0,03 W/m·K oder mehr bei den für die Systeme üblichen Betriebsbedingungen.

Weiter ist ein Isoliersystem mit einer Wärmeleitfähigkeit knapp unter 0,03 W/m·K bekannt, nämlich mit R11 getriebener Polyurethan-Schaum in Form von geschlossenporigen Platten mit einer Wärmeleitfähigkeit von ca. 0,029 W/m·K. Steife Schaumstoffe wie z. B. auch expandiertes Polystyrol haben eine geringe Formbarkeit und Flexibilität. Durch diffusive Transportvorgänge oder nicht vollständig geschlossene Poren kann sich in kurzer Zeit die Isolationswirkung wieder auf die für den Einsatz mit Luft üblichen Werte verringern.

Demgegenüber bieten Isoliersysteme ohne feste Gaseinschlüsse wie z. B. solche auf der Basis von Mineralfaserstoffen meist sehr gute Verarbeitungseigenschaften in bezug auf ihre hohe Verformbarkeit und Flexibilität; auch hier liegen übliche Betriebswärmeleitfähigkeiten jedoch nicht unter 0,03 W/m·K. Derartige Systeme neigen ferner zur Flüssigkeits- oder Wasseraufnahme, wobei der Feuchtigkeitsgehalt die Wärmeleitfähigkeit vergrößert und die Isolationswirkung herabsetzt. Zum Schutz vor Feuchtigkeit (oder Flüssigkeit) bedürfen diese Systeme daher zusätzlicher Vorkehrungen.

Aus dem alltäglichen Gebrauch sind ferner evakuierte Systeme zur Wärmeisolation bekannt, beispielsweise von Warmhalte-Kannen. Je nach Ausführung lassen sich Wärmeleitfähigkeiten von weniger als 0,01 W/m·K erzielen. Die Realisierung evakuierter - und vor allem bleibend evakuierter - Systeme ist mit einem erhöhten Aufwand verbunden. Evakuierte Isolier-Systeme sind in aller Regel starr. Hierzu zählt auch das in EP-0 463 311 beschriebene Vakuumisolationspanel.

Ebenfalls aus dem Alltag als Verpackungsmittel bekannt sind flexible Kunststoffolien, die (meist regelmäßig verteilt) mit Luft gefüllte Kammern umschließen und dadurch eine polsternde Wirkung besitzen. Luft besitzt bei Raumtemperatur und Atmosphärendruck eine Wärmeleitfähigkeit von ca. 0,026 W/m·K.

Damit stellt sich die Aufgabe, ein kostengünstiges, flexibles Isoliersystem für eine Vielzahl von Formen und Konturen mit einer deutlich verbesserten Isolationswirkung zu erstellen.

Diese Aufgabe wird erfindungsgemäß gelöst durch den im Patentanspruch 1 näher gekennzeichneten wärmeisolierenden Beutel. In einer sehr einfachen Ausführungsform besteht dieser Beutel aus zwei flexiblen Folienstücken aus einem polymeren Werkstoff, die an ihren Rändern gasdicht miteinander verbunden sind und somit eine Außenhaut bilden für einen umschlossenen Raum (im folgenden Kammer genannt), der mit einem wärmeisolierenden Material gefüllt ist, das ebenfalls leicht verformbar ist und eine Isolationswirkung besitzt, die einer Wärmeleitfähigkeit von kleiner oder gleich 0,02 W/m·K bei den vorgesehenen Einsatzbedingungen des Beutels entspricht. Als Einsatzbedingungen sind hier insbesondere die Temperaturverhältnisse des zu isolierenden Körpers und der Umgebung zu berücksichtigen, da die Wärmeleitfähigkeit vor allem temperaturabhängig ist. Üblicherweise erfolgt die Verwendung des wärmeisolierenden Beutels bei Atmosphärendruck.

Zur Füllung der Beutel dienen vorzugsweise Schwergase oder Schwergasgemische mit einer Molmasse größer als ca. 40 g/mol und mit Wärmeleitfähigkeiten kleiner oder gleich 0,02 W/m·K im betrachteten Temperatur- und Druckbereich, also z. B. Argon, Krypton, Xenon, Schwefelhexafluorid, Kohlendioxid und höhere Kohlenwasserstoffe. Die Schwergase können auch in Verbindung mit leicht verformbaren, hochporösen Feststoffen verwendet werden, so daß die Füllung ein leicht deformierbares disperses System oder Gel bildet. Geeignete Feststoffe sind z. B. hochdisperse Kieselsäuren, geblähte Perlite, silikatische Stoffe wie Kieselgur oder Extrusil sowie Aerogele mit geringen Festkörperwärmeleitfähigkeiten unter 0,02 W/m·K. Insbesondere werden pyrogene Kieselsäuren eingesetzt wie z. B. Cab-O-Sil TS-530 der Fa. Cabot. Auch die in EP-0 463 311 genannten Feststoffe und Feststoffmischungen können verwendet werden, soweit dabei die erfindungsgemäße Wärmeisolationswirkung erzielt wird. Die Fülldichte des feinverteilten Stoffes kann ca. 40 bis 200 g/Liter, vorzugsweise 50 bis 120 g/Liter betragen. Durch das Einbringen hochporöser Feststoffe können unerwünschte Konvektionsströmungen innerhalb der Gasfüllung verhindert werden.

Zur Bildung der Außenhaut werden bevorzugt flexible, polymere Materialien wie z. B. Polybutylenterephthalat, Polyethylenterephthalat oder andere Polyester, Polyethylenvinylacetat, Polyamide, Polyimide, Polyvinylchlorid, Polycarbonat, Polyolefine, Polyurethane oder Polymere auf Fluorolefinbasis verwendet, die eine geringe Gasdurchlässigkeit für die eingesetzten Schwergase besitzen. Besonders geeignet sind Materialien mit einer Wasserdampfdurchlässigkeit von 0 bis 0,2 g/m²·d bei 23 °C und 85 % relativer Feuchte sowie Gasdurchlässigkeiten für N₂, O₂ und CO₂ von in der Summe 0 bis 0,5 cm³/m²·d·bar bei 23 °C; denn wärmeisolierende Beutel, die unter Verwendung dieser Materialien hergestellt wurden, lassen ohne deutliche Einbußen hinsichtlich der Isolationswirkung eine Lebensdauer von etwa 5 bis 10 Jahren und mehr erwarten. Zur Verringerung der Gasdurchlässigkeit und des Wärmetransports durch Strahlung können die Materialien zusätzlich metallisiert sein, z. B. mit Aluminium mit einer Schichtdicke von 7 bis 50 µm, bevorzugt etwa 10 µm, wobei die Metallisierung des Materials auch nur einseitig erfolgen kann. Bevorzugt werden diese Materialien in Form von leicht verformbaren Einschicht- oder Mehrschichtfolien mit einer gewissen Dehnelastizität und mit einer Dicke bis 0,2 mm zur Herstellung des Beutels verwendet, bei schweren (mechanischen) Beanspruchungen kann die Dicke jedoch bis zu 2 mm betragen. Durch das Anbringen zusätzlicher Verbindungsstellen oder -nähte zwischen den Folien oder durch das Einbringen von Stegen ebenfalls aus einem flexiblen, polymeren Material kann der Beutel in mehrere Kammern unterteilt werden, die gänzlich voneinander getrennt oder miteinander verbunden sein können. Auch durch das Einbringen von Trennschichten, deren Flächenvektor etwa parallel zur Richtung des Wärmestromes verläuft, kann eine Unterteilung in getrennte oder verbundene Kammern erfolgen. Das verwendete Trennmaterial kann mit dem Material der Außenhaut übereinstimmen. Zur Vermeidung von Wärmebrücken zwischen der Kalt- und Warmseite durch die Metallisierung des Außenhaut- und/oder Trennmaterials (insbesondere an den Rändern und Stegen des Beutels) können auch nur Teile der Außenhaut bzw. des Trennmaterials am fertigen Beutel metallisiert sein. Bevorzugt beträgt das gefüllte Kammervolumen des fertigen Beutels mehr als 90 Prozent des Volumens des Umhüllungsquaders für den Beutel, dessen Volumen sich aus der größten Länge, der größten Breite und der größten Höhe des Beutels berechnet.

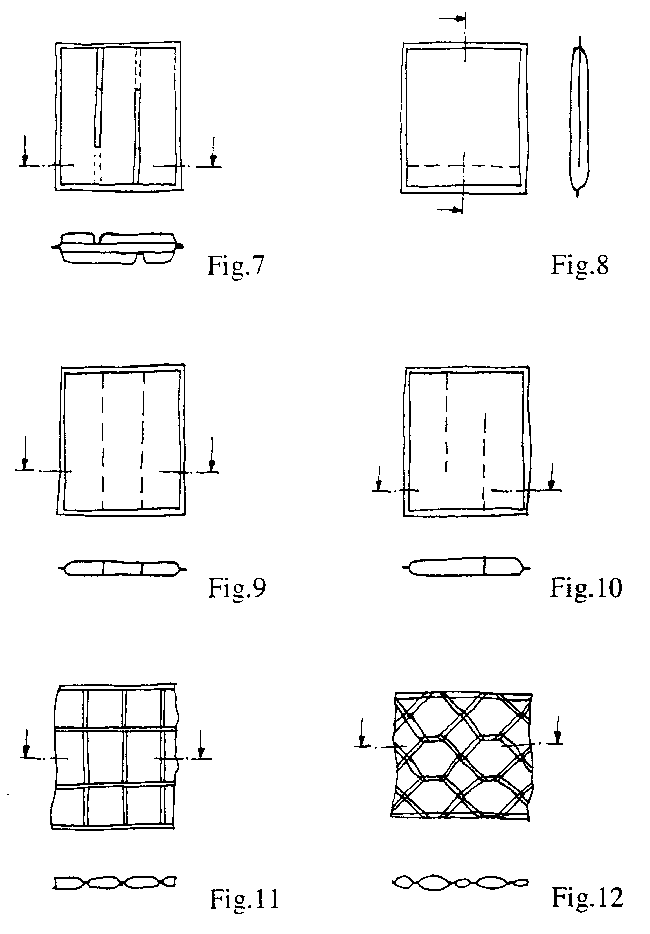

Der wärmeisolierende Beutel kann als fertiges Einzelstück in vorgegebenen Abmaßen hergestellt werden. Ein Arbeitsschritt im Herstellungsprozeß kann dabei die Extrusion der Beutelaußenhaut als Endlosband oder -schlauch sein. Alternativ kann die Außenhaut auch vor Ort an die Geometrie des zu isolierenden Körpers angepaßt und gefüllt werden. Das Formen der Kammern und das Verbinden der Beutelteile erfolgt bevorzugt durch Prägen und Verschweißen oder Kleben. Darüber hinaus kann der wärmeisolierende Beutel als viele Kammern enthaltende, flexible Meterware hergestellt werden, die vor Ort nach Bedarf zugeschnitten wird, wobei das Zertrennen einzelner Kammern ggf. sogar in Kauf genommen wird. Ein Ausführungsbeispiel zeigt Figur 12. Die Größe und Form der Kammern (Waben, Rechtecke usw.) kann an den Hauptanwendungsfall angepaßt werden.

Die Füllung des Beutels ist ggf. unter Berücksichtigung der Elastizität des verwendeten polymeren Materials in jedem Fall so zu bemessen, daß keine Zerstörung der Kammer oder der Kammern durch eine temperaturbedingte Volumenänderung des eingefüllten Gases bei den Einsatzbedingungen eintritt. Dies ist insbesondere von Belang, falls die Außenhaut sich nicht an anderen Körper-Konturen abstützen kann.

Der erfindungsgemäße wärmeisolierende Beutel wird bevorzugt zur Wärmeisolation von Apparaten, Rohrleitungen und Behältern verwendet.

Der erfindungsgemäße wärmeisolierende Beutel besitzt die folgenden Vorteile:
- Der wärmeisolierende Beutel ist flexibel und kann leicht an vorhandene Konturen angepaßt werden. Er kann je nach Ausführung sogar vor Ort als Meterware gefüllt zugeschnitten bzw. erst nach dem Zuschnitt vor Ort gefüllt werden. Er kann in beliebigen Größen und Geometrien hergestellt werden und ist damit universell einsetzbar.
- Es werden Wärmeisolationswirkungen erreicht, die bei der Umrechnung der erzielten Wärmedurchgangskoeffizienten unter Berücksichtigung der Geometrien in äquivalente Wärmeleitfähigkeiten auf Wärmeleitfähigkeitswerte von weniger als 0,02 W/m·K für den wärmeisolierenden Beutel führen. Dies entspricht einer Verringerung der Wärmeleitfähigkeit von mehr als 30 % bezogen auf die Wärmeleitfähigkeit der meisten praktisch wichtigen Isoliersysteme, deren Wärmeleitfähigkeit 0,03 W/m·K nicht unterschreitet.
- Bei Mehrkammerbeuteln mit voneinander getrennten Kammern bleibt die Isolationswirkung bei der Beschädigung einer einzigen Kammer dennoch weitgehend erhalten. Sind die Kammern zusätzlich zum Schwergas noch mit einem hochporösen Feststoff gefüllt, fällt der Verlust an Isolationswirkung noch geringer aus.
- Durch die Zugabe von hochporösen Feststoffen zur Füllung der Beutel können die mechanischen Eigenschaften der wärmeisolierenden Beutel gezielt beeinflußt werden.
- Die wärmeisolierenden Beutel sind durch ihre Außenhaut unempfindlich gegenüber Feuchtigkeit und vielen Flüssigkeiten, die somit keinen Einfluß auf die Wärmeleitfähigkeit des Systems besitzen.
- Durch die Verwendung von für Schwergase nahezu gasundurchlässigen Materialien für die Außenhaut bleibt die Isolationswirkung über große Zeiträume erhalten.
- Die Zugabe von hochporösen Feststoffen zur Füllung wirkt einem Wärmetransport durch Konvektion entgegen.
- Das Metallisieren der Außenhaut und/oder der Trennwände zwischen Kammern mindert die Wärmeübertragung durch Strahlung.
- Der wärmeisolierende Beutel kann kostengünstig als fertiges Einzelstück oder als Meterware hergestellt werden. Auch eine einfache Fertigstellung vor Ort ist möglich.
- Durch mehrlagige Verwendung können sehr einfach verbesserte Isolationseffekte erzielt werden.
- Durch die Verwendung stärkerer Folien für die Außenhaut kann die Gefahr einer Beschädigung der Kammern verringert werden.
- Die aus Gründen des Umweltschutzes umstrittenen chlorierten und/oder fluorierten Kohlenwasserstoffe werden nicht eingesetzt.

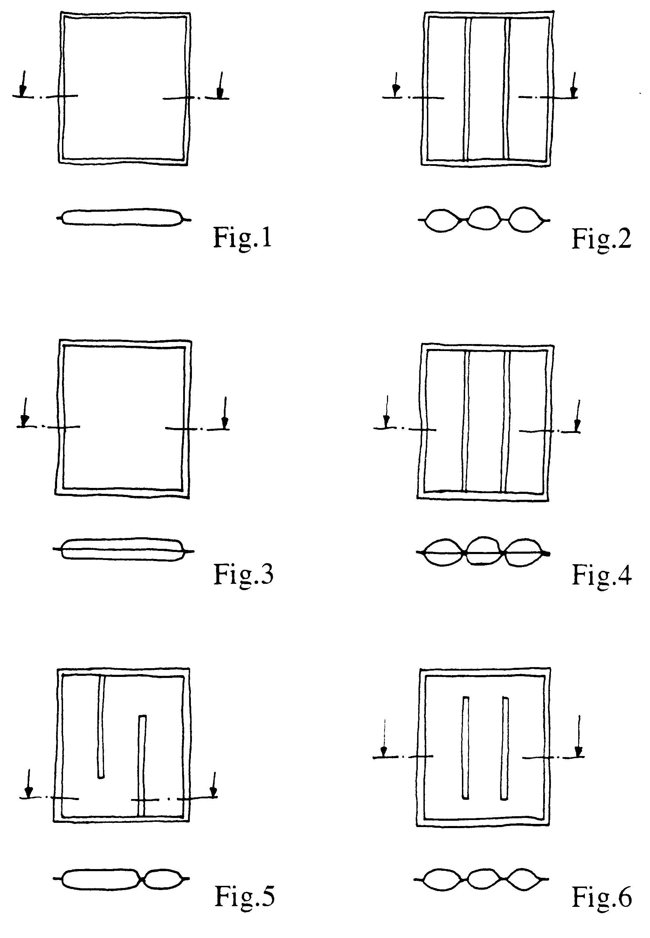

Die Figuren 1 bis 12 zeigen eine nicht vollständige Auswahl möglicher Ausführungsformen. Die Figuren zeigen jeweils eine Draufsicht auf den Beutel sowie (unterhalb oder neben der Draufsicht angeordnet) einen Schnitt durch den wärmeisolierenden Beutel an der gekennzeichneten Stelle. In Figur 1 ist zunächst die beschriebene, sehr einfache Ausführungsform dargestellt, bei der zwei Folienstücke an ihren Rändern miteinander verbunden sind und eine einzige Kammer bilden, die mit einem verformbaren Material einer Wärmeleitfähigkeit kleiner oder gleich 0,02 W/m·K gefüllt ist. Durch Einbringen von zwei weiteren Verbindungsnähten entsteht die Variante nach Figur 2, die drei voneinander getrennte Kammern besitzt, die von ihrer räumlichen Ausdehnung her betrachtet nebeneinander angeordnet sind. Durch das Einbringen einer Trennfolie parallel zu den Außenhautfolien zwischen die Außenhautfolien erhält man den wärmeisolierenden Beutel mit zwei getrennten, übereinander angeordneten Kammern nach Figur 3. Durch Kombination der Ausführungen nach Figur 2 und Figur 3 entsteht die Variante in Figur 4 mit insgesamt sechs getrennten Kammern.

Anders als in Figur 2 können zusätzliche Verbindungsnähte auch zu miteinander verbundenen Kammern führen, vgl. Figur 5, wenn sie nicht jeweils an einer weiteren Verbindungsnaht enden. Stehen zusätzliche Verbindungsnähte (oder -stellen) in keiner Verbindung zu einer weiteren Verbindungsnaht, ergibt sich z. B. die in Figur 6 dargestellte Ausführung. Durch die Kombination unvollständiger und damit nicht vollständig trennender Verbindungsnähte mit zusätzlichen Trennfolien parallel zu den Außenhautfolien erhält man Figur 7 mit einerseits vollständig getrennten und andererseits miteinander verbundenen Kammern. Wird in Anlehnung an Figur 3 ein von den Abmessungen her kleineres Folienstück als die Außenhautfolien als Trennfolie verwendet, entstehen untereinander verbundene, übereinander liegende Kammern (Figur 8). Das gleiche Ergebnis wird erzielt, wenn die Trennfolie zur Verkleinerung der Fläche Ausnehmungen oder Löcher enthält. Die Figuren 9 und 10 zeigen Varianten, bei denen die Unterteilung in Kammern nicht durch Verbindungsnähte, sondern durch Trennstege erfolgt, die ebenfalls aus Kunststoffolienstücken bestehen. Durch z. B. das Abtrennen der rechten und linken Kammer in Figur 9 (oder eine direkte entsprechende Herstellung des Beutels) können Trennstege auch zu Bestandteilen der Außenhaut werden. Sind die Trennstege im Vergleich zur übrigen Außenhaut nicht metallisiert, werden Wärmebrücken zwischen der Kalt- und der Warmseite weitgehend vermieden. Die Figuren 11 und 12 zeigen zwei Ausführungsformen des wärmeisolierenden Beutels als Meterware mit unterschiedlichen Kammergeometrien.

Der erfindungsgemäße wärmeisolierende Beutel wird durch die folgenden Beispiele näher beschrieben:

### Vergleichsbeispiel 1:

Die Innenwand eines Metallbehälters (Innendurchmesser 80 mm, Höhe 200 mm) wird mit Ausnahme des Bodens mit einer 10 mm dicken Schicht eines handelsüblichen PUR-Schaumstoffes versehen. Zur Isolation des Behälterbodens ist eine ca. 15 mm dicke Polystyrolschaumstoff-Scheibe eingelegt. In den so isolierten Behälter wird ein zweiter Aluminium-Behälter (Außendurchmesser 60 mm, Wandstärke 0,5 mm, Höhe 185 mm) eingesetzt, der 350 g Wasser mit einer Anfangstemperatur von 82 °C enthält und der mit einem Kunststoffstopfen verschlossen ist. Das Gesamtsystem wird unter Umgebungsbedingungen (Raumtemperatur ca. 22 °C) gelagert. Nach vier Stunden beträgt die Temperatur des Wassers nur noch ca. 38 °C.

### Beispiel 1:

Eine mit Aluminium metallisierte Polyesterfolie (insgesamt 100 µm dick) wird zu einem Mehrkammerbeutel nach Figur 5 verschweißt. Zur Füllung des Beutels dient Krypton. Der fertige Beutel besitzt die äußeren Abmessungen 200 mm lang x 220 mm breit x 10 mm dick und wird anstelle des PUR-Schaumstoffes zur Auskleidung des im Vergleichsbeispiel 1 verwendeten Behälters verwendet. Derselbe Aluminium-Innenbehälter wird wieder gefüllt mit 350 g Wasser mit einer Anfangstemperatur von 82 °C in den Behälter eingesetzt. Nach 4 Stunden bei Umgebungsbedingungen beträgt die Temperatur des Wassers noch etwa 56 °C. Die Isolationswirkung des erfindungsgemäßen Beutels übertrifft die von PUR-Schaumstoff also deutlich.

### Beispiel 2: Flachbeutel

Eine mit eloxiertem Aluminium metallisierte Polyethylenvinylacetatfolie (insgesamt 80 µm dick) wird zu einem Flachbeutel mit einer Kammer und den Abmessungen 200 mm lang x 200 mm breit x 18 mm dick verklebt. Als Füllmaterial dient Xenon mit hochdisperser Kieselsäure (Cab-O-Sil TS-530, Fa. Cabot). Die Messung der Wärmeleitfähigkeit nach DIN 52616 liefert den Wert 0,019 W/m·K.

## Patentansprüche

1. Wärmeisolierender Beutel,
gekennzeichnet durch
- eine leicht verformbare, flexible Außenhaut, die zumindest eine Kammer umschließt, die mit zumindest einem verformbaren, flexiblen Material, dessen Wärmeisolationswirkung der eines Stoffes mit einer Wärmeleitfähigkeit λ ≦ 0,02 W/m·K bei den vorgesehenen Einsatzbedingungen entspricht, gefüllt ist.

2. Wärmeisolierender Beutel nach Anspruch 1,
gekennzeichnet dadurch,
- daß das Verhältnis von eingeschlossenem Kammervolumen zum Volumen des Umhüllungsquaders größer oder gleich 0,9 ist.

3. Wärmeisolierender Beutel nach Anspruch 1 oder 2,
gekennzeichnet dadurch,
- daß die Kammern durch Prägen, Verschweißen oder Kleben und/oder im Zuge eines Extrusionsprozesses, der ein Endlosband erzeugt, entstehen.

4. Wärmeisolierender Beutel nach Anspruch 1, 2 oder 3,
gekennzeichnet dadurch,
- daß die Außenhaut mehrere, voneinander getrennte Kammern bildet oder umschließt, wobei zusätzliches Trennmaterial zwischen den Kammern leicht verformbar und flexibel ist.

5. Wärmeisolierender Beutel nach Anspruch 1, 2, 3 oder 4,
gekennzeichnet dadurch
- daß die Außenhaut mehrere, miteinander verbundene Kammern bildet oder umschließt, wobei zusätzliches Trennmaterial zwischen den Kammern leicht verformbar und flexibel ist.

6. Wärmeisolierender Beutel nach einem der Ansprüche 1 bis 5,
gekennzeichnet dadurch,
- daß die Außenhaut aus einem flexiblen, polymeren Material besteht, bevorzugt aus Polyethylenvinylacetat, Polyamiden, Polyimiden oder Polyestern, insbesondere Polybutylenterephthalat oder Polyethylenterephthalat.

7. Wärmeisolierender Beutel nach Anspruch 6,
gekennzeichnet dadurch,
- daß vorhandenes Trennmaterial zwischen den Kammern mit dem Material der Außenhaut übereinstimmt.

8. Wärmeisolierender Beutel nach Anspruch 6 oder 7,
gekennzeichnet durch
- eine Dicke des polymeren Materials von bis zu 2 mm.

9. Wärmeisolierender Beutel nach Anspruch 6, 7 oder 8,
gekennzeichnet dadurch,
- daß zumindest ein Teil des polymeren Materials zumindest einseitig metallisiert ist, bevorzugt mit Aluminium.

10. Wärmeisolierender Beutel nach einem der Ansprüche 6 bis 9,
gekennzeichnet dadurch,
- daß das polymere Material eine geringe Gasdurchlässigkeit für Schwergase (mit einer Molmasse größer als ca. 40 g/mol) besitzt.

11. Wärmeisolierender Beutel nach einem der Ansprüche 1 bis 10,
gekennzeichnet durch
- die Füllung der Kammer oder der Kammern mit einem Schwergas oder Schwergasgemisch, bevorzugt mit Argon, Krypton, Krypton/Xenon, Kohlendioxid, Schwefelhexafluorid.

12. Wärmeisolierender Beutel nach Anspruch 11,
gekennzeichnet durch
- die Füllung der Kammer oder der Kammern zusätzlich zum Schwergas mit einem leicht verformbaren, hochporösen Feststoff, der mit dem Schwergas ein disperses System bildet, bevorzugt mit hochdispersen Kieselsäuren.

13. Verwendung des wärmeisolierenden Beutels nach Anspruch 1 zur Wärmeisolierung von Apparaten, Rohrleitungen und Behältern.
